# EUROPEAN PATENT APPLICATION

(11) **EP 1 110 660 A2**
(43) Date of publication of application: **27.06.2001**
(21) Application number: 00124044.9
(22) Date of filing: 04.11.2000
(51) Int. Cl.: B23K 26/00

(54) **Laser marking compositions and methods for producing bright oxidation resistant marks**

(30) Priority: 23.11.1999 US 447650
(71) Applicant: dmc2 Degussa Metals Catalysts Cerdec AG, 60287 Frankfurt am Main (DE)
(72) Inventor: Knell, Timothy A., McMurray, PA 15317 (US)

(57) **Abstract**

Compositions and methods for laser marking substrates such as metal, glass and ceramic are disclosed. A marking material is applied to the surface of the substrate, followed by irradiation of a portion of the marking material to form a bright, oxidation resistant marking on the substrate. The non-irradiated portion of the marking material is then removed from the substrate. The marking material comprises compounds such as metal salts and metal oxides which, upon irradiation, form oxidation resistant metallic markings. The marking method is highly versatile, can be performed quickly, and produces permanent marks of high resolution and contrast without damage to the substrate.

## Description

### FIELD OF THE INVENTION

The present invention relates to marking of substrates, and more particularly relates to laser marking compositions and methods for producing bright, oxidation resistant marks on various types of substrates such as metals, glasses and ceramics.

### BACKGROUND INFORMATION

Laser marking methods have recently been developed for marking metals, plastics, ceramics and glasses. Laser marking of metals typically involves a vaporization process, wherein a laser is used to remove or ablate metal from the surface along the travel path of the laser. The resultant marking comprises engraved or indented portions which provide three-dimensional contrast to the surface of the metal. Alternatively, laser marking of metals may be achieved by annealing a selected portion of the metal surface to provide areas of contrasting color. In this case, instead of removing metal from the surface, the laser is used to heat the surface of the metal to an annealing temperature which typically results in darkening of the annealed regions of the metal substrate.

Plastics are typically laser marked by either changing the color of the plastic or engraving the surface of the plastic along the travel path of the laser. The color of the plastic is typically changed by localized melting and re-solidification of the plastic. In contrast, engraving is achieved by vaporization and removal of the plastic. Plastic laser engraving methods can be used to remove a surface layer of the plastic to reveal an underlying layer of contrasting color. Such a process is disclosed in U.S. Patent No. 5,061,341 to Kildal et al.

Laser marking of ceramics and glasses has also been investigated, as a replacement for conventional etching, engraving and glazing techniques. For example, laser marking of glass has been achieved by ablation techniques as disclosed in U.S. Patents No. 4,327,283 to Heyman et al. and U.S. Patent No. 4,515,867 to Bleacher et al. In the disclosed methods, two coating layers are applied to a glass substrate, and the top layer is removed by the laser to reveal the contrasting underlayer.

Another technique for laser marking ceramics and glasses is disclosed in U.S. Patent No. 4,769,310 to Gugger et al. and U.S. Patent No. 5,030,551 to Herren et al. In this technique, a glaze having a radiation-sensitive additive comprising an inorganic pigment or titanium dioxide is deposited and fired on the surface of a ceramic or glass substrate. A laser beam is then used to irradiate the fired surface layer to thereby change the color of the surface layer in the areas of irradiation.

Despite the above-noted marking techniques, a need still exists for a method of marking substrates such as metals, ceramics and glasses which produces permanent marks of high brightness and oxidation resistance with minimal or no damage to the substrate.

### SUMMARY OF THE INVENTION

The present invention provides bright, high contrast marks on a variety of substrates including metals, glasses and ceramics. A marking material comprising a metal compound is applied to the surface of the substrate and irradiated with a laser to produce a highly readable metallic mark. When marking on metallic substrates, the marks are preferably based on metals which are more oxidation or corrosion resistant than the substrates upon which they are applied.

An aspect of the invention is to provide a method of marking a surface of a substrate. The method includes the steps of applying a marking material comprising at least one decomposable metal compound comprising a salt, oxide or organometallic compound of at least one transition metal to the surface of the substrate, irradiating a portion of the marking material with a beam to adhere the irradiated marking material on the surface of the substrate and to form a metallic marking thereon, and removing a non-irradiated portion of the marking material from the substrate.

Another aspect of the invention is to provide a method of marking a surface of a substrate and maintaining a readable mark after the marked substrate has been exposed to elevated surface temperatures. The method includes the steps of applying a marking material comprising at least one decomposable metal compound comprising a salt, oxide or organometallic compound of at least one transition metal to the surface of the substrate, irradiating a portion of the marking material with a beam to adhere the irradiated marking material on the surface of the substrate and to form a metallic marking thereon, removing a non-irradiated portion of the marking material from the substrate, heating the marked substrate to a service temperature of at least 300°C, preferably greater than 500°C or even greater than 800°C and recovering the marked substrate after exposure to the service temperature, wherein the marking is legible after the exposure to the service temperature.

A further aspect of the invention is to provide a laser marking material comprising at least one decomposable metal compound comprising a salt, oxide or organometallic compound of at least one transition metal.

Another aspect of the invention is to provide a metallic laser marking comprising at least one transition metal adhered to a substrate. At least a portion of the metallic laser marking is formed from an irradiated decomposable metal compound comprising a salt, oxide or organometallic compound of the transition metal.

These and other aspects of the present invention will be more apparent from the following description.

### BRIEF DESCRIPTION OF THE DRAWINGS

Fig. 1 is a partially schematic isometric view of a substrate coated with a marking material in accordance with an embodiment of the present invention.

Fig. 2 is a partially schematic isometric view of the substrate of Fig. 1 after a portion of the marking material has been irradiated with a laser.

Fig. 3 is a partially schematic isometric view of the substrate of Figs. 1 and 2 after the non-irradiated portion of the marking material has been removed, resulting in a bright, oxidation resistant mark on the substrate.

Fig. 4 is a partially schematic isometric view of a substrate coated with a marking material in accordance with another embodiment of the present invention.

Fig. 5 is a partially schematic isometric view of the substrate of Fig. 4 after a portion of the marking material has been irradiated with a laser.

Fig. 6 is a partially schematic isometric view of the substrate of Figs. 4 and 5 after the non-irradiated portion of the marking material has been removed, resulting in a bright, oxidation resistant mark on the substrate.

Fig. 7 is a photograph of a titanium alloy substrates marked in accordance with the present invention. The upper image of Fig. 7 shows the substrate after the marking operation. The lower image of Fig. 7 shows a similar marked titanium alloy substrate after exposure to a service temperature of about 538°C (1,000°F).

Fig. 8 is a photograph of stainless steel substrates marked in accordance with the present invention. The upper image of Fig. 8 shows the substrate after the marking operation. The lower image of Fig. 8 shows a similar marked stainless steel substrate after exposure to a service temperature of about 538°C (1,000°F).

Fig. 9 is a photograph of an Inconel nickel alloy substrate which was laser marked with different types of marking material compositions and subsequently exposed to a service temperature of about 538°C (1,000°F). The marks made with marking materials of the present invention remained bright and readable after exposure to the elevated service temperature, while marks made with a marking material comprising elemental metal powder were illegible after exposure to the elevated temperature.

### DETAILED DESCRIPTION

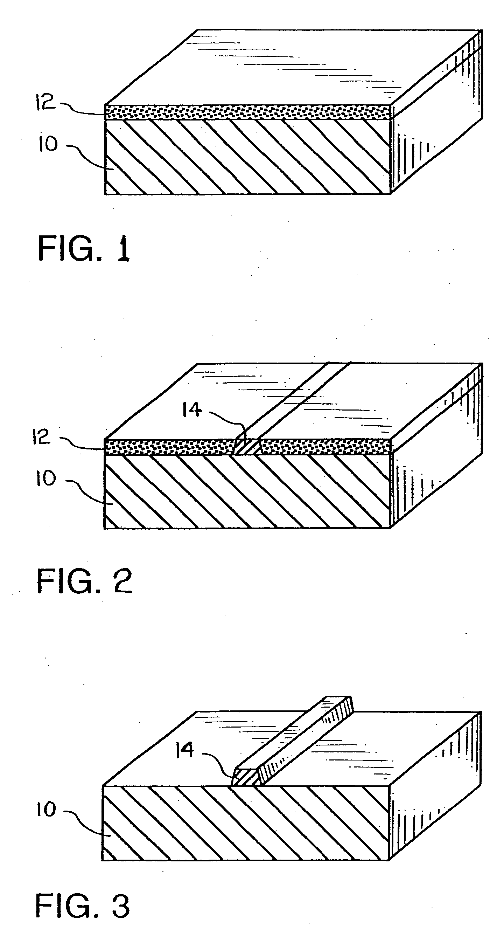

Figs. 1-3 illustrate a laser marking method in accordance with an embodiment of the present invention. In Fig. 1, a substrate 10 has a layer of marking material 12 applied thereto. Fig. 2 illustrates the substrate 10 and marking material 12 after a portion of the marking material 12 has been irradiated by a laser (not shown) which travels across and projects a beam roughly perpendicular to the upper surface of the layer of marking material 12. The irradiated portion 14 is adhered to the surface of the substrate 10 and forms a bright oxidation resistant marking thereon. In Fig. 3, the non-irradiated portion of the marking material 12 has been washed off, leaving the marking 14 on the substrate 10.

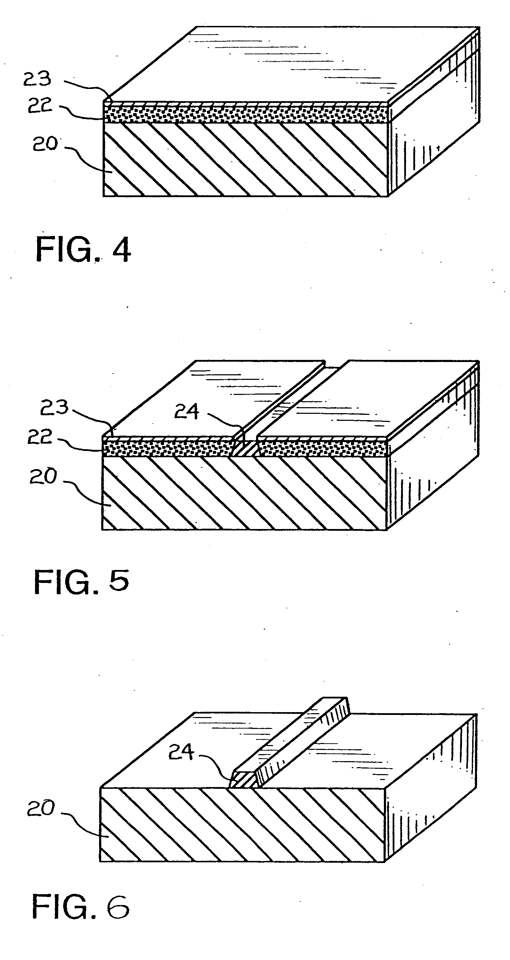

Figs. 4-6 illustrate a laser marking method in accordance with another embodiment of the present invention. In Fig. 4, a layer of marking material 22 is adhered to an adhesive sheet of backing material 23. The backing material may comprise paper, plastic film or the like. The layer of marking material 22 and backing material 23 are applied to the substrate 20. Fig. 5 illustrates the substrate 20, marking material 22 and backing material 23 after a portion of the marking material 24 has been irradiated by a laser (not shown) which travels across and projects a beam substantially perpendicular to the surface of the layer of marking material 22. The irradiated portion 24 is adhered to the surface of the substrate 20 and forms a bright, oxidation resistant marking thereon. In Fig. 6, the non-irradiated portion of the marking material 22 has been removed by peeling the backing material 23 and non-irradiated marking material 22 away from the substrate 20. The irradiated marking 24 remains permanently adhered to the substrate 20.

In accordance with the present invention, marking materials are provided which convert to bright, oxidation resistant marks during the laser marking operation, or upon subsequent treatment after the marking process. As used herein the term "marking material" means a decomposable metal compound including at least one metal salt, metal oxide or organometallic compound. The decomposable metal compound preferably has a decomposition temperature below the melting temperature of the transition metal of the compound. The decomposition temperature of the compound may be below 800°C, preferably below 600°C. For many applications, the decomposition temperature of the compound may be below 300 or 400°C.

The metal component of the decomposable metal compound preferably comprises at least one transition metal of the Periodic Table including the Group IB or coinage metals which resist oxidation. If such metals are oxidized they can at least partially revert or be reduced to the base metal form upon heating, even in oxidizing conditions. Most of the Group VIII metals also exhibit this behavior. The autoreducing effect in both groups may become more pronounced for the heavier members of the groups. Other metals are useful in this invention, but may require the presence of additives to provide reducing conditions during the thermal treatment step. Preferred metals or metal cations of the marking materials include silver, copper, gold, platinum, palladium, ruthenium, rhodium, rhenium, osmium and iridium. More preferred metals are silver, copper, gold, platinum and palladium.

Preferred anions of the marking material metal compounds are carbonates, oxides and hydroxides, fluorides, chlorides and chlorates, bromides and bromates, iodides and iodates, cyanides and cyanates, nitrites and nitrates, phosphides and phosphates, sulfides, sulfites and sulfates, and thiocyanates. More preferred anions are carbonates, oxides, hydroxides and nitrates.

A preferred feature of this invention is that the metal compounds of the marking materials decompose to the reduced form of the marking metal at temperatures well under the melting point of the pure marking metal. Significant grain growth or film formation can be made at relatively low temperatures or short times at higher temperatures. For example, silver has a melting point of 961°C, while silver carbonate decomposes at about 218°C and silver(I) oxide decomposes at approximately 300°C. Good marks can be made with the compositions of this invention at lower laser energy settings than would be required using only metal powders as the marking material, thereby avoiding or reducing thermal damage to the substrate.

In one embodiment, the marking material includes metallic salts that are thermally decomposed to simpler salts and/or the base metal itself upon irradiation by a laser to form markings the desired. Under the appropriate conditions, thin films of the metals of such salts can be formed on the substrates. Coating a substrate with a composition containing the proper metal salt(s) and applying a differential heat source such as a steered beam laser can generate marks, patterns or images of the applied metal base or, in some instances where the substrate is a metal, an alloy of the substrate metal and the applied metal. The surface of the marked area has a different composition than the surrounding substrate and consequently has different appearance, chemical and physical properties.

Mixtures of metal compounds may be used to form specific alloys. For example, silver and copper salts may be blended to give varying shades of marks. Intermetallic compounds comprising selenium and tellerium such as AuTe₂, Au₂Se₃ and Ag₂Se may also be used. Organic salts of these metals may be used. Preferred compounds are the salts of simple organic acids such as acetates, citrates, oxalates, lactates and tartrates. Also preferred are the salts of fatty, naphthenic and resin acids and amines often referred to as metal resinates. Mixed metal salts like Ag₂CrO₄ are useful. In addition, complex metal salts such as phosphomolybdates and phosphotungstates may be used. As a particular example, copper pyrophosphate marking material works well to produce markings on bonded tungsten carbide, Inconel and stainless steel substrates. Furthermore, many of the precious metals suitable for use in the present marking materials are available as complexes based on organic ligands or chelating groups often containing oxygen, sulfur, nitrogen and/or halogen atoms. An example is tetramine platinum (II) chloride, (Pt(NH₃)₄)Cl₂·H₂O.

Metal powders such as silver, copper, zinc, bronze, tin, indium, lead, bismuth, cadmium, etc. may optionally be added to the metal salts to form alloys. Such metal powders may comprise up to about 80 weight percent of the marking material, depending upon the particular marking application. Even small amounts of such metal powder additions to the marking materials may help with wetting the substrate, and may help reduce the amount of material that might otherwise be vaporized or spalled away by the laser. Preferred amounts of metal additions are from about 0.1 to 50 weight percent of the marking material powder for many applications. However, where "gold" marks are desired, for example, on glass or china substrates, or where electrically conductive silver or copper marks are desired on non-conductive substrates, the amount of elemental metal powder contained in the marking material may be increased, e.g., to 70 or 80 weight percent. Precious metal sols, which are finely divided forms of the metals, e.g., less than 1 micron, may be easier to fuse than larger metal powders. For example, a mixture including gold sol and tin hydrate may produce marks similar to bright gold.

In accordance with an embodiment of the invention, security and/or tracibility issues may be addressed by doping the main metal of the marking material with small but distinct amounts of other metals. The tracer metal may preferably comprise from 0.01 to 10 weight percent of the final metallic marking. For example, a silver carbonate-based marking material could be doped with 0.1% rhodium and 0.2 wt.% platinum. This would not be detectable visually, but if the pedigree of the marked object came into question, X-ray analysis could determine the specific dopants and the amounts of such dopants. Preferred dopant metals include noble metals such as gold, platinum, palladium, rhodium, rhenium, ruthenium, iridium and osmium, refractory metals such as titanium, zirconium, hafnium, tantalum and tungsten, and rare earth metals such as lanthanum, cerium, praeseodymium, neodymium, europium and the like. The dopant metal(s) may be provided as part of a decomposable metal compound, and/or may be provided in elemental powder form. Such tracers may be used for various applications, such as aircraft engine parts, art objects, precious metal ingots and semiconductors. The tracers could be used, for example, where tracibility of a particular item is needed, or where concern for counterfeiting exists.

The addition of fluxes may produce preferred materials. Fluxes such as ammonium and/or metal halides or transition metal salts of organic acids may help the marking material wet the substrate surface and alter the surface tension of the hot metal. This may give smoother textured marks with better adhesion. Some of these fluxes may be marking materials in their own right, e.g., AgCl added to Ag₂O. Silver and copper phosphates are suitable marking materials when used alone, but may also be useful fluxing agents when used in combination with other compositions. The fluxing agents may also function as grain refiners for the marking material.

Additions of refractory fillers such as rare earth oxides, oxides of Groups IIIB and IVB metals, nitrides, carbides, borides and silicates may improve the mechanical properties such as hardness and abrasion resistance of the marks, and may also serve as grain refiners for the marking material. The amounts of such refractory fillers may be adjusted to customize the marking material for specific applications. For example, where the refractory fillers are used for grain refining purposes, from about 0.01 to about 5 weight percent may be used, more preferably from about 0.05 to about 3 weight percent.

Additions of substances to enhance laser absorption or to produce reducing atmospheres during the thermal treatment process may be used, such as carbonaceous materials, rare earth compounds, pigments, dyes or reducing agents such as ureas and sugars.

The marking materials may be provided in loose powder form, may be dispersed in various types of carriers or may be coated onto flexible substrates to form tapes or stickers. The use of tapes may provide evenness of the film, ease of cleanup, and the ability of reclaiming the precious metals components of the marking material.

When the marking material is dispersed in a carrier, non-waterbased mediums and/or essentially water insoluble salts, e.g., less than 1 percent solubility, are desirable to avoid spontaneous plating reactions with certain combinations. For example, silver nitrate, solubility 122gr per 100 ml at 0°C, is not as versatile as Ag₂Co₃, solubility 0.0032gr per 100 at 20°C. Suitable carriers include water and organic solvents such as alcohols, ketones, hydrocarbons, chlorinated hydrocarbons, and the like. Solutions of organic resins in these solvents are preferred in that more mechanical durability is given to the material before lasing to facilitate handling. Inorganic film formers such as natural and modified clays, silicates, and phosphates dispersed or solubilized in water also make preferred carriers as there is no organic material to burn off in the lasing process.

In accordance with the present invention, various substrate materials can be marked. For example, the present method may be used to mark metal, glass, ceramic, composite, brick, stone, and plastic substrates. High-temperature substrates having melting points above, e.g., 300°C may be marked in accordance with an embodiment of the invention. For example, high-temperature substrates may have melting points above 500 or 800°C, or higher.

Suitable metal substrates include both pure metals and alloys. Examples include iron, aluminum, titanium, tantalum, and common alloys such as steel, stainless steel, brass and bronze. Tool steels and plated steels such as aluminized, tin plated, chrome plated, galvanized and terne steels are suitable substrates. In addition, reactive and refractory metals such as titanium, niobium, tantulum and zirconium alloys may be used as the substrate. High performance proprietary alloys such as Inconel, Hastelloy, Haynes, Monel, Incoloy and Nimonic alloys are especially suited. Glass substrates include clear and colored soda-lime and borosilicate glasses as well as specialized glasses and materials like fused quartz and lead crystal. Ceramic substrates include fired clayware, alumina, mullite and whiteware, both as is and glazed. Suitable composite substrates include cermets such as cobalt bonded tungsten carbide, nickel bonded tungsten carbide and the like. Typical plastic substrates include relatively high temperature thermoplastic and thermosetting resins such as polyamide, polycarbonate, ABS, silicone, epoxy, polyurethane and phenolic resins.

Types of substrates that may be marked in accordance with the present invention include automotive parts, automotive glass, aerospace parts, medical devices, electronic devices, cutting tools, consumer products, packaging, glass bottles, metal cans, metal tags, bricks, tiles, plumbing electrical and construction supplies, lighting decorative ceramics, art objects, bullion, gemstones, machine parts and the like.

Various methods may be used to apply the marking material to the surface of the substrate. The substrate surface can be coated with powders of marking material or, preferably, it can be coated with a dispersion of the powders in a suitable carrier. Water based media are preferred because of their minimal environmental impact, but solvent based media can also be used to control drying rate, dispersion or moisture sensitivity of certain marking materials. In accordance with one embodiment, sol gel materials may be used to apply the marking material to the substrate. Where dispersions are used, the deposited layer can be dried prior to the irradiation step, however this is not necessary. The marking material in a water or solvent dispersion can be applied onto the substrate surface by various methods such as screen printing, brushing, spraying, roll coating, dipping, flow coating, electrostatic application and doctor blading. Marking materials can also be dispersed in high temperature waxes or polymers and applied to a substrate surface from a hot melt or by rubbing the surface of the substrate with such a material. Alternatively, the layer of marking material may be applied in the form of a tape, sticker or decal, and can be on the surface thereof or dispersed therein. The marking material is typically applied to the substrate with a thickness of from about 1 to about 500 microns, more preferably from about 5 to about 200 microns.

After the marking material is applied to the surface of the substrate, a selected portion of the marking material is irradiated with a beam to adhere the irradiated marking material to the substrate and to form a permanent marking thereon. For many types of markings, the selected portion of the marking material may comprise from about 1 to about 99 percent of the total surface area of the layer of marking material, typically from about 5 to about 95 percent. A laser is preferably used to selectively irradiate the marking material. However, other forms of focused energy may be used in accordance with the present invention. Irradiation may be achieved by moving a laser beam over a stationary substrate using conventional beam steering methods, by moving the substrate in relation to the laser beam and/or by masking the substrate. Laser irradiation is typically achieved by directing the beam directly against the layer of marking material, but may also be achieved by directing the beam through a sufficiently transparent substrate.

Suitable lasers for use in accordance with the present invention include neodymium:yttrium aluminum garnet (Nd:YAG) lasers, carbon dioxide (CO₂) lasers, diode lasers, excimer lasers and the like.

Typical YAG lasers emit light in the near-infrared spectrum at wavelengths of 1064 nm. Such lasers typically have continuous power outputs of from about 1 to about 50 watts, and can be operated in a pulsed mode at typical peak powers of from about 1 watt to about 45 kilowatts. For pulsed mode operation, frequencies of from about 1 to about 64,000 pulses/second may be used.

Typical C02 lasers emit light in the far-infrared region of the spectrum, with intensity spikes at wavelengths of 9.8 and 10.6 microns. Such CO₂ lasers typically operate at a continuous output power of from about 1 to about 40 watts.

In accordance with the present invention, the size of the laser spot that impinges the marking material is typically greater than 0.1 micron in diameter, preferably from about 40 to about 500 microns, and more preferably from about 50 to about 125 microns. The speed at which the laser beam travels across the surface of the marking material preferably ranges from 0 to about 100 inches/second (up to about 250 cm/second), more preferably from about 1 or 2 to about 20 inches/second (about 2.5 or 5 to 50 cm/second) for most thicknesses and compositions of marking material. The laser beam may be projected with a seam overlap of 0 to 100 percent, preferably from about 10 to about 90 percent for many applications. The laser parameters are controlled in order to provide sufficient localized heating of the marking material while avoiding unwanted damage to the substrate.

For many laser marking operations, a Lumonics LightWriter Spe YAG laser operating under the following parameters is suitable. Typically, marks on a glass substrate may be made using pulsing or continuous wave, lamp currents from about 30 to about 38 amps, energy levels from about 100 watts/cm² to about 5 megawatts/cm² during continuous wave operation, marking speeds from about 1 to about 20 inches/second (about 2.5 to 50 cm/second), laser dot sizes from about 0.002 to about 0.01 inches (about 50 and 250 microns), and seam overlaps from about 25 to about 50 percent. Laser marking is typically performed with the beam in focus, but may also be carried out with the beam out of focus. Lamp currents of from about 28.5 to about 30 amps and writing speeds of from about 2 to about 5 inches/second (about 5 to 12.7 cm/second) are particularly advantageous for many applications.

The laser beam, the movement of which can be controlled by a computer, may be used to create discrete symbols or designs or, alternatively, may be serially indexed across the surface of the marking material to create multiple symbols or designs at the same time. For example, a word may be created by separately making each letter of the word with the laser, or by rastering the laser across the entire word to form all of the letters at the same time.

During the irradiation step, the surface of the substrate may be exposed to any desired type of atmosphere. For example, the atmosphere may comprise air at atmosphere, sub-atmospheric or super-atmospheric pressures. Furthermore, the atmosphere may comprise an inert gas such as nitrogen, argon or carbon dioxide, an oxidizing atmosphere such as air or oxygen, a reducing atmosphere such as hydrogen or carbon monoxide, or a vacuum.

Oxidizing or reducing gases can be used in a combination with inert gases. It is also possible to control the atmosphere on the surface of the substrate through the type of media the marking material is dispersed in. The atmosphere to which the surface of the substrate is exposed may affect the color and the quality of the mark. A single laser beam may be used for marking in accordance with the present invention. Alternatively, two or more laser beams may be used. For example, a first laser beam may be used to preheat the marking material and substrate, followed by a second laser which is used to adhere the marking material to the preheated substrate. This is particularly advantageous for marking glass because preheating may help to reduce internal stress and micro-cracking that can result from the laser marking operation.

After the selected portion of the marking material has been irradiated, the non-irradiated portion of the marking material is removed from the substrate. In the embodiment shown in Figs. 1-3, the non-irradiated portion of the marking material may be removed by methods such as washing, brushing off, vacuuming, subliming or blowing off the surface. In the embodiment shown in Figs. 4-6, the non-irradiated portion of the marking material remains adhered to the adhesive sheet 23, and may be removed from the substrate 20 by peeling the adhesive sheet and non-irradiated layer of material away from the substrate.

In accordance with the present invention, a selected portion of the marking material is adhered to the substrate upon irradiation or upon subsequent treatment. As used herein, the term "adhere" is used to designate any substantially permanent means of attachment of the irradiated marking material to the substrate. For example, the irradiated marking material may be adhered to the surface of the substrate by sintering the marking material to the substrate, fusing the marking material to the surface of the substrate, diffusing at least a portion of the marking material into the substrate, reacting the marking material with the substrate and the like. The marking material may also be adhered to the substrate by subsequent heat treatment after irradiation.

The markings produced in accordance with the present invention may be indented into the substrate, but in some preferred applications have a thickness of from 0 to about 200 microns as measured from the surface of the substrate, preferably from about 0.05 to about 50 microns. Thicker markings may be preferred where the marking is to be used as an electrically conductive pattern. Under the preferred marking conditions, substantially no indention or removal of the substrate is observed. In many applications, it is preferably to avoid removal of the substrate material because indentations tend to weaken the substrate. Where the metallic marking is to be used to conduct electrical current, it preferably has a resistance of less than 10 ohms/square, more preferably less than 1 ohm/square. For some applications, an electrical resistance of less than 0.1 ohm/square is preferred, more preferably less than 0.01 ohm/square.

Upon irradiation, the resultant metallic marking comprises the transition metal, or an alloy thereof, which originated from the decomposable metal compound. In many applications, the transition metal comprises at least 20 weight percent of the metallic marking, typically at least 50 weight percent. In many applications were the transition metal comprises, e.g., silver, copper, gold, platinum or palladium, at least 80 weight percent of the metallic marking comprises such transition metals, more preferably at least 90 weight percent for some applications. Relatively high levels of transition metals are often desired in metallic markings which are to be used as electrically conductive patterns, or for many applications where the marked substrate is subsequently exposed to high service temperatures. Relatively low levels of transition metals may be present in some types of metallic markings, for example, where the metallic markings are subjected to extensive wear or abrasion, in which case wear-resistant fillers may be used extensively.

Various types of marks may be produced in accordance with the present invention. For example, the marks may comprise alphanumeric symbols, graphics, logos, designs, decorations, serializations, bar codes, two dimensional matrices and the like by using conventional laser controlled hardware and software, the markings of the present invention may be quickly varied from operation to operation for applications such as serialization, bar codes, manufacturing quality control and automated manufacturing. The bright, oxidation resistant markings are preferably formed with high contrast and high resolution. Resolution of the mark is primarily determined by the size of the laser beam and the particle size of the marking material. Contrast/color of the mark is typically determined by the composition of the marking material.

The following examples illustrate various aspects of the present invention and are not intended to limit the scope of the invention. In the following examples, a medium of 5% hydroxypropylcellulose sold under the designation Klucel E by Hercules, Inc. is dissolved in ethanol to make a carrier for the metal salt marking material powders.

### Example 1

Copper (II) pyrophosphate, Cu₂P₂O₇·3H₂O, (Alfa AESAR) was dispersed in a sufficient amount of the carrier to make a brushable paste. The mixture was painted onto a black cobalt bonded tungsten carbide cutting tool and allowed to dry. A 35 watt CO₂ laser was used to mark bright copper colored lettering on the tool. The remaining unimaged marking material was washed off.

### Example 2

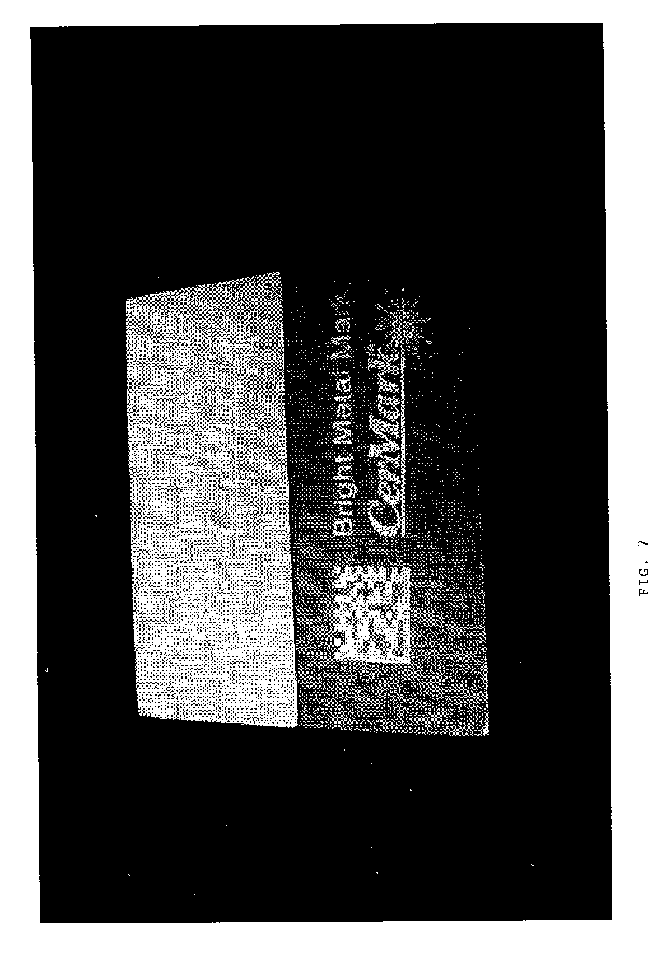

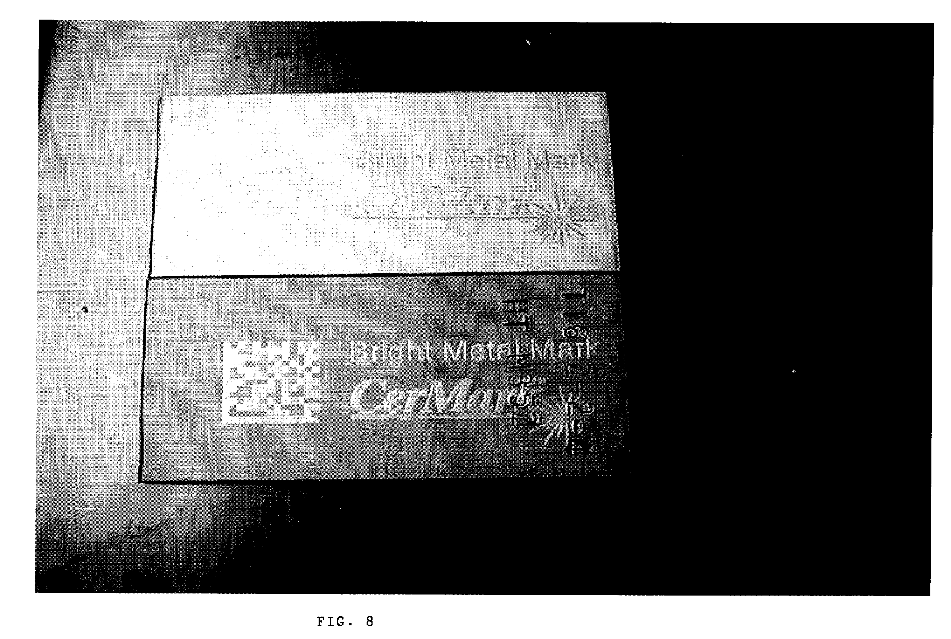

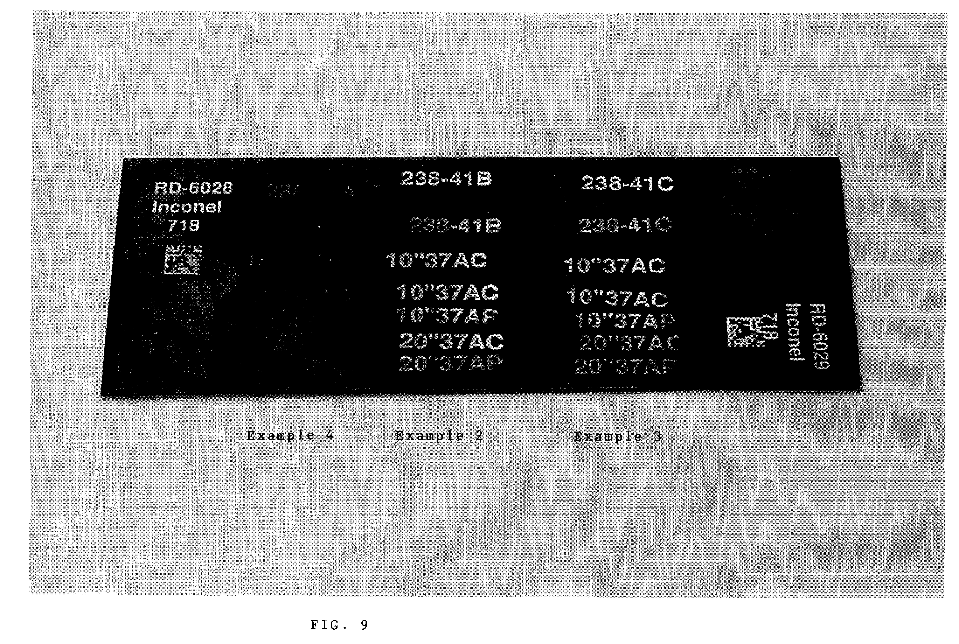

Silver carbonate, Ag₂CO₃, (Cooper Chemical) was dispersed into the carrier. The mixture was painted onto black cobalt bonded tungsten carbide cutting tools, and coupons of Inconel 718, Ti-6-2-2-4 and stainless steel 410, and allowed to dry. A 35 watt CO₂ laser made bright, silvery marks on all of the substrates. Similar results were obtained with a 50 watt Nd:YAG laser. The marks on tungsten carbide had high contrast in comparison with the relatively dark substrate. The marks on the gray semi-lustrous metal substrates were also highly readable. The marks on the Ti-6-2-2-4 and stainless steel 410 substrates are shown in the upper images of Figs. 7 and 8, respectively. Some of the marked Ti-6-2-2-4 and stainless steel 410 substrates were heated to 538°C. After heating, the marks were still highly readable, as shown in the lower images of Figs. 7 and 8, respectively. When the marked Inconel substrate was subsequently heated to 538°C. to mimic a service temperature cycle, the Inconel substrate darkened substantially but the area marked with the silver carbonate marking material remained bright silver colored with high contrast as shown in the photograph of Fig. 9.

### Example 3

Silver oxide, Ag₂O, was used instead of silver carbonate to mark an Inconel 718 substrate in a manner similar to Example 2. The resultant marks were very similar to those made on the Inconel 718 substrate of Example 2, and were highly readable upon irradiation and upon subsequent heating of the marked substrate. The marked Inconel 718 substrate, after exposure to the 538°C. service temperature, is shown in Fig. 9.

### Example 4

Silver metal was used instead of silver carbonate in an attempt to mark an Inconel 718 substrate in a manner similar to Example 2. The resultant marks were not readable. After exposure to the 538°C service temperature, the marks remained unreadable, as shown in Fig. 9.

### Example 5

A mixture of 25 weight percent Ag₂O and 75 weight percent Ag metal powder was used instead of silver carbonate to mark an Inconel 718 substrate in a manner similar to Example 2. The resultant marks were sharply defined, but were thicker than those produced in Example 2.

### Example 6

A platinum-based composition comprising platinum resinate and auxiliaries sold under the designation GP 500 Bright Platinum by Cerdec was painted on an Inconel 718 substrate and allowed to dry. A 35 watt CO₂ laser produced smooth dark marks and a 50 watt Nd:YAG laser in a 40kHz pulsing mode gave bright metallic marks. Both marks still had good contrast after the Inconel substrate was darkened upon heating to 1,000°F.

### Example 7

A composition containing 5 parts copper(II) pyrophosphate, 10 parts silver powder (Degussa), 5 parts silver(I) oxide (Degussa), 10 parts Bronze 5890 powder (Acupowder International, LLC), Tin 301 powder (Acupowder), and 10 parts of the Klucel in ethanol carrier were blended and applied to both soda-lime glass and glazed ceramic dinnerware. A 50 watt Nd:YAG laser in the continuous wave mode gave bright, gold colored marks. When operated in the 40kHz pulsing mode the same laser gave very bright, almost mirror finish, gold colored marks.

### Example 8

A composition containing 10 parts silver powder (Degussa), 5 parts silver(I) oxide (Degussa), 3 parts silver othophosphate (Alfa-AESAR), 5 parts Tin 301 powder (Acupowder), 2 parts Ultrox 1000W zirconium silicate powder (Elf Atochem), and 5 parts of the Klucel in ethanol carrier were mixed and applied to soda-lime glass and glazed ceramic dinnerware. A 50 watt Nd:YAG laser in the continuous wave mode gave bright silver or platinum colored marks. When operated in the 40 kHz pulsing mode the same laser gave very bright silver or platinum colored marks.

### Example 9

A composition containing 10 parts silver powder (Degussa), 3 parts silver(I) oxide (Degussa), 2 parts of 2% Laponite RD (synthetic clay from Laporte) in water were mixed and thinned with sufficient water to apply a 20 mil wet film to soda-lime automotive glass. After drying a 50 watt Nd:YAG laser operating with a lamp current of 33 amps and writing at 10 in/sec produced an approximately 0.8 mm width line pattern with an electrical resistance of about 0.004 ohms/square. This resistance value is in the range of conventional fired ceramic silver conductive coatings.

Whereas particular embodiments of this invention have been described above for purposes of illustration, it will be evident to those skilled in the art that numerous variations of the details of the present invention may be made without departing from the invention as defined in the appended claims.

## Claims

1. A method of marking a surface of a substrate comprising:
applying a marking material comprising at least one decomposable metal compounds comprising a salt, oxide or organometallic compound of at least one transition metal to the surface of the substrate;
irradiating a portion of the marking material with a beam to adhere the irradiated marking material on the surface of the substrate and to form a metallic marking thereon; and
removing a non-irradiated portion of the marking material from the substrate.

2. The method of claim 1, wherein the transition metal comprises at least one metal from groups IB and VIII of the Periodic Table.

3. The method of claim 1, wherein the transition metal comprises at least one metal selected from silver, copper, gold, platinum, palladium, ruthenium, rhodium, rhenium, osmium and iridium.

4. The method of claim 1, wherein the decomposable metal compound comprises at least one carbonate, oxide, hydroxide, fluoride, chloride, chlorate, bromide, bromate, iodide, iodate, cyanide, cyanate, nitride, nitrate, phosphide, phosphate, pyrophosphate, sulfide, sulfate or thiocyanate of the transition metal.

5. The method of claim 1, wherein the decomposable metal compound comprises at least a metal salt of an organic acid or a metal resinate.

6. The method of claim 1, wherein the marking material further comprises up to about 80 wt.-% of at least one metal powder selected from the group comprising silver, copper, zinc, bronze, tin, indium, lead, bismuth and cadmium.

7. The method of claim 1, wherein the decomposable metal compound has a decomposition temperature below the melting temperature of the transition metal.

8. The method of claim 1, wherein the marking material is applied to the surface of the substrate with a thickness of from about 1 to about 500 microns.

9. The method of claim 1, wherein the marking material is adhered to a backing material.

10. The method of claim 1, wherein the portion of the marking material is irradiated with a laser.

11. The method of claim 1, wherein the metallic marking comprises at least 20 wt.-% of the transition metal from the decomposable metal compound.

12. The method of claim 1, wherein the metallic marking comprises at least 0.01 wt.-% of a refractory filler and/or from about 0.01 to about 5 wt.-% of at least one grain refiner.

13. The method of claim 1, wherein the metallic marking has an electrical resistance of less than 10 ohms/square.

14. The method of claim 1, wherein the substrate is selected from the group comprising metals, glasses, ceramics and cermets.

15. The method of claim 1, further comprising:
heating the marked substrate to an elevated service temperature; and
recovering the marked substrate after exposure to the service temperature, wherein the metallic marking is legible after the exposure to the service temperature.

16. A method of marking a surface of a high-temperature substrate comprising:
applying a marking material comprising at least one decomposable metal compound comprising a salt, oxide or organometallic compound of at least one transition metal to the surface of the substrate;
irradiating a portion of the marking material with a beam to adhere the irradiated marking material on the surface of the substrate and to form a metallic marking thereon;
removing a non-irradiated portion of the marking material from the substrate;
heating the marked substrate to a service temperature of at least 300 °C; and
recovering the marked substrate after exposure to the service temperature, wherein the metallic marking is legible after the exposure to the service temperature.

17. The method of claim 16, wherein the service temperature is greater than 500 °C.

18. The method of claim 16, wherein the decomposable metal compound has a decomposition temperature below a melting temperature of the transition metal.

19. A laser marking material comprising at least one decomposable metal compound comprising a salt, oxide or organometallic compound of at least one transition metal.

20. The laser marking material of claim 19, wherein the at least one decomposable metal compound comprises at least one carbonate, oxide, hydroxide, fluoride, chloride, chlorate, bromide, bromate, iodide, iodate, cyanide, cyanate, nitride, nitrate, phosphide, phosphate, pyrophosphate, sulfide, sulfite, sulfate, thiocyanate or salt of an organic acid or resinate of a transition metal from groups IB and VIII of the Periodic Table.

21. The laser marking material of claim 19, wherein the transition metal comprises at least one metal selected from silver, copper, gold, platinum, palladium, ruthenium, rhodium, rhenium, osmium and iridium.

22. The laser marking materials of claim 19, wherein the marking material further comprises at least one metal powder, preferably selected from silver, copper, zinc, bronze, tin, indium and lead.

23. The laser marking material of claim 19, further comprising at least 0.01 wt.-% of a refractory filler and/or from about 0.01 to about 5 wt.-% of at least one grain refiner.

24. The laser marking material of claim 19, wherein the decomposable metal compound is dispersed in a liquid carrier.

25. The laser marking material of claim 19, wherein the decomposable metal compound is adhered to a backing material.

26. A metallic laser marking comprising at least one transition metal adhered to a substrate, wherein at least a portion of the metallic laser marking is formed from an irradiated decomposable metal compound comprising a salt, oxide or organometallic compound of the at least one transition metal.
